# EUROPÄISCHE PATENTSCHRIFT

(11) **EP 2 657 727 B1**
(45) Veröffentlichungstag und Bekanntmachung des Hinweises auf die Patenterteilung: **21.08.2019**
(21) Anmeldenummer: 13159321.2
(22) Anmeldetag: 15.03.2013
(51) Int. Cl.: G01V 8/20, G01J 1/02, G01V 8/22

(54) **Lichtvorhang**
Light curtain
Rideau lumineux

(30) Priorität: 26.04.2012 DE 102012103651
(43) Veröffentlichungstag der Anmeldung: 30.10.2013
(73) Patentinhaber: Leuze electronic GmbH + Co KG, 73277 Owen/Teck (DE)
(72) Erfinder: Lehmann, Joachim, 73252 Lenningen (DE); Patz, Jürgen, 72660 Beuren (DE); Mück, Armin, 72124 Pliezhausen (DE); Deutschmann, Martin, 73730 Esslingen (DE); Schedlberger, Robert, 4283 Bad Zell (AT); Schönleitner, Arnold, 3002 Purkersdorf (AT)
(74) Vertreter: Ruckh, Rainer Gerhard

(56) Entgegenhaltungen:
- EP-A2- 1 933 172
- DE-A1-102005 046 478
- DE-A1-102007 014 170
- DE-U1-202007 010 492
- JP-A- 2007 157 556
- US-A- 5 013 911
- US-A1- 2011 226 938

## Beschreibung

Die Erfindung betrifft einen Lichtvorhang gemäß dem Oberbegriff des Anspruchs 1.

Derartige Lichtvorhänge bilden generell mehrstrahlige Lichtschrankensysteme, mittels derer ein Eindringen von Objekten in einen flächigen, vorzugsweise in einer Ebene verlaufenden Überwachungsbereich überwacht werden kann. Die Lichtschrankenanordnung weist hierzu in zwei Gehäusen integrierte optoelektronische Elemente auf, die von Lichtstrahlen emittierenden Sendern und Lichtstrahlen empfangenden Empfängern gebildet sind. Die beiden Gehäuse sind an gegenüberliegenden Rändern des Überwachungsbereichs angeordnet. Die optoelektronischen Elemente sind innerhalb der Gehäuse so angeordnet, dass die Lichtstrahlen entlang mehrerer, vorzugsweise parallel und in Abstand zueinander verlaufender Strahlachsen innerhalb des Überwachungsbereichs geführt sind. Ein Objekt gilt dabei dann als erkannt, wenn die Sendelichtstrahlen wenigstens einer Strahlachse unterbrochen sind.

Die Gehäuse derartiger Lichtvorhänge bestehen aus Hohlprofilen, die insbesondere als aus Metall bestehende Stranggussprofile ausgebildet sein können. Die optoelektronischen Elemente sind innerhalb diesem Hohlprofil angeordnet. Dabei liegen die optoelektronischen Elemente im Innenraum der Hohlprofile hinter Durchbrüchen, die in die dem Überwachungsbereich zugewandte Frontwand des jeweiligen Hohlprofils eingearbeitet sind.

Die Hohlprofile sind an ihren längsseitigen Enden offen, so dass über diese Öffnungen die optoelektroischen Elemente in den Innenraum des jeweiligen Hohlprofils eingeführt werden können. Diese Öffnungen werden nach erfolgter Montage der optoelektronischen Elemente in den Hohlprofilen mit Endkappen verschlossen.

Durch eine geeignete Anbringung der Durchbrüche kann die gesamte Länge des jeweiligen Hohlprofils für die Integration der optoelektronischen Elemente ausgenutzt werden, so dass sich das von den Lichtstrahlen abgedeckte Messfeld im Wesentlichen über die gesamte Länge der Hohlkörper erstreckt. Die in axialer Richtung über die Hohlprofile hervorstehenden Endkappen bilden jedoch Totbereiche, da dort keine aktiven optoelektronischen Elemente integriert sind, das heißt die Bereiche der Endkappen werden nicht zur Ausbildung des Messfelds genutzt. Wenn in den Endkappen Elektronikkomponenten wie elektrische Anschlüsse oder dergleichen vorhanden sind, weisen die Endkappen selektiv große Baugrößen auf, so dass die durch die Endkappen entstehenden Totbereiche unerwünscht groß sind.

Die DE 20 2007 010 492 U1 betrifft eine optoelektronische Sensoranordnung mit einem Gehäuse, in welchem wenigstens ein Lichtsender und/oder ein Lichtempfänger angeordnet ist, wobei das Gehäuse im Wesentlichen quaderförmig mit vier Längsseiten und zwei Stirnseiten ausgebildet ist. An dem Gehäuse sind wenigstens ein erstes Kontaktelement zur elektrischen Kontaktierung der optoelektronischen Sensoranordnung und wenigstens ein Befestigungselement zur Befestigung des Gehäuses angeordnet. Das wenigstens eine erste Kontaktelement und das wenigstens eine Befestigungselement sind an einer der Längsseiten des Gehäuses angeordnet.

Die US 5 013 911 betrifft einen Sensor mit zwei Gehäusen, wobei in dem einen Gehäuse ein Lichtstrahlen emittierenden Sender und in dem anderen Gehäuse ein Lichtstrahlen empfangender Empfänger angeordnet ist. Jedes Gehäuse weist einen an einen Seitenwand ausmündenden rohrförmigen Ansatz auf, in welchem ein Fenster eingebaut ist, wobei der Sender beziehungsweise Empfänger hinter dem jeweiligen Fenster angeordnet ist. Jeder rohrförmige Ansatz kann in ein Loch einer Führungsplatte eingesteckt werden, welche zum Führen von zu detektierendem Papier dient.

Die US 2011/0226938 A1 betrifft einen mehrachsigen photoelektrischen Sensor mit wenigstens einer Sendeeinheit mit einer Reihenanordnung von Lichtstrahlen emittierenden Sendern und einer Empfängereinheit mit einer Reihenanordnung von Lichtstrahlen empfangenden Empfängern. Sowohl die Sendereinheit als auch die Empfängereinheit sind in einem Gehäuse integriert, welches einen langgestreckten Gehäusekörper aufweist, auf dessen längsseitige Enden Endsektionen aufgesetzt sind, deren Längsachsen mit der Längsachse des Gehäusekörpers zusammenfallen. An den Endsektionen sind Kabelanschlüsse vorgesehen, mittels derer unterschiedliche Sendereinheiten und Empfängereinheiten verbunden werden können.

Die DE 10 2005 046 478 A1 betrifft einen photoelektrischen Mehrstrahl-Sensor, der durch Auswahl der Länge eines Lichteinstrahl/Lichtempfangs-Säulenteils und der Anzahl und Abstände optischer Achsen in vielseitiger Weise nach Maßgabe der Weite eines Gefahrenbereichs eines Objekts oder eines Durchmessers des festzustellenden Minimalobjekts hergestellt werden kann.

Das Gehäuse jedes Säulenteils enthält einen Säulengehäusekörper, eine Endkappe zum Verschließen einer Endöffnung des Säulengehäusekörpers und eine Endkappe zum Verschließen der anderen Endöffnung.

Die JP 2007(157556 A betrifft ein Lichtgitter mit einer Sendereinheit und einer Empfängereinheit, die jeweils in einem Gehäuse integriert sind. Das Gehäuse weist einen Gehäusekörper auf, dessen längsseitige Enden mit Endkappen verschlossen sind. Zudem können seitlich am Gehäuse elektrische Anschlussmittel angebracht werden.

Der Erfindung liegt die Aufgabe zugrunde, einen Lichtvorhang der eingangs genannten Art bereitzustellen, welcher bei möglichst geringem konstruktivem Aufwand eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße Lichtvorhang dient zur Erfassung von Objekten in einem Überwachungsbereich und umfasst eine Anordnung von optoelektronischen Elementen, welche von Lichtstrahlen emittierenden Sendern und von Lichtstrahlen empfangenden Empfängern gebildet ist. Wenigstens ein Gehäuse dient zur Aufnahme der optoelektronischen Elemente, wobei das Gehäuse einen Gehäusekörper in Form eines Hohlkörpers aufweist, in welchem die optoelektronischen Elemente in Richtung der Längsachse des Gehäusekörpers in Abstand hintereinander angeordnet sind. Der Gehäusekörper weist an seinen längsseitigen Enden jeweils eine Öffnung auf, welche mit Endkappen verschlossen sind. Wenigstens eine Endkappe weist einen flächigen Adapter auf, welcher eine Öffnung des Gehäusekörpers abschließt und an welchem ein seitlich am Gehäusekörper anliegender Kappenkörper anschließt, welcher Elektronikkomponenten aufnimmt. Der flächige Adapter einer Elektronikkomponente ist plattenförmig ausgebildet und der Kappenkörper liegt mit einer Wand flächig an einer Seitenwand des Gehäusekörpers an. Die Endkappen sind für eine Kaskadierung mehrerer Lichtvorhänge ausgebildet.

Prinzipiell können alle optoelektronischen Elemente, also alle Sender und Empfänger, in einem Gehäuse angeordnet sein, das an einem Rand des Überwachungsbereichs angeordnet ist. Gemäß einer ersten Variante kann am anderen Rand des Überwachungsbereichs ein Reflektor in Form eines Retroreflektors oder einer Reflex-Folie angeordnet sein. Dann werden bei freiem Überwachungsbereich die von den Sendern emittierten Lichtstrahlen von dem Reflektor zu zugeordneten Empfängern zurückreflektiert. In diesem Fall bildet der Lichtvorhang einen Reflexions-Lichtvorhang. Gemäß einer zweiten Alternative kann der Reflektor weggelassen werden. In diesem Fall werden nur bei einem Objekteingriff Lichtstrahlen von Sendern am Objekt reflektiert und zu zugeordneten Empfängern geführt.

Gemäß einer weiteren Ausgestaltung der Erfindung weist dieser eine Sendereinheit mit einem ersten Gehäuse auf, in welchem optoelektronische Elemente in Form von Lichtstrahlen emittierenden Sendern integriert sind, sowie eine Empfängereinheit mit einem zweiten Gehäuse, in welchem optoelektronische Elemente in Form von Lichtstrahlen empfangenden Empfänger integriert sind.

Bei allen Ausführungsformen kann eine beliebige Zuordnung von Sendern und Empfängern gewählt werden, so dass die Lichtstrahlen zwischen Sendern und zugeordneten Empfängern parallel, schräg oder gekreuzt verlaufen können.

Bei dem erfindungsgemäßen Lichtvorhang wird durch die Anordnung der optoelektronischen Elemente im Gehäusekörper das Messfeld, innerhalb dessen eine Objekterfassung möglich ist, vorgegeben. Dabei wird vorteilhaft die Anordnung der optoelektronischen Elemente so gewählt, dass diese über die gesamte Länge des jeweiligen Gehäusekörpers verteilt sind. Damit wird die gesamte Länge des jeweiligen Gehäusekörpers zur Ausbildung des Messfelds genutzt.

Durch die erfindungsgemäße Ausbildung der Endkappen wird erreicht, dass durch diese die Bauhöhe der Gehäuse nicht nennenswert erhöht wird, da der Adapter einer Endkappe ein sehr flach bauendes Bauteil ist. Dies bedeutet, dass sich trotz der auf den Gehäusekörper aufgebrachten Endkappen das Messfeld dennoch nahezu über die gesamte Höhe des Gehäuses erstreckt.

Dadurch wird erreicht, dass der Lichtvorhang nahezu keinen Totbereich aufweist, in welchem keine Objektdetektion erfolgt. Da sich die Messfelder nahezu über die gesamte Höhe der Gehäuse erstrecken, kann über die gesamte von den an gegenüberliegenden Rändern des Überwachungsbereichs angeordneten Gehäusen begrenzte Fläche eine Objektdetektion erfolgen.

Damit aber kann der Lichtvorhang auch in räumlich beengten Einbausituationen eingesetzt werden, wobei mit diesem eine Objektdetektion ermöglicht wird, ohne dass unterwünschte von einer Objektdetektion ausgenommene Totbereiche entstehen.

Besonders vorteilhaft ist dabei auch eine Kaskadierung mehrerer Lichtvorhänge möglich, wobei sich deren einzelne Messfelder ohne nennenswerte Totbereiche zu einem Gesamt-Messfeld zusammensetzen lassen. Damit können auch große und komplex gestaltete Überwachungsbereiche überwacht werden.

Dabei ist insbesondere auch eine Anordnung derart möglich, dass die Lichtvorhänge einen geschlossenen Rahmen bilden.

Eine besonders vollständige lückenlose Überwachung eines Überwachungsbereichs ergibt sich, wenn alle Öffnungen aller Gehäusekörper mit der erfindungsgemäßen Endkappe abgeschlossen sind. Prinzipiell sind jedoch auch abgewandelte Anordnungen möglich, bei welchen nicht sämtliche Öffnungen des Gehäusekörpers mit den erfindungsgemäßen Endkappen verschlossen sind.

Gemäß einer vorteilhaften Ausgestaltung weist jeder Gehäusekörper eine Frontwand mit einem Fenster, durch welches die Lichtstrahlen geführt sind, auf. Der oder jeder Kappenkörper einer Endkappe liegt an einer von der Frontwand abgesetzten Seitenwand des Gehäusekörpers an.

Da der Kappenkörper an einer anderen Wand anliegt als an der Frontwand, in der das Fenster vorgesehen ist, wird durch den Kappenkörper das Messfeld, das von den einzelnen Lichtstrahlen abgedeckt wird, nicht beeinträchtigt. Somit kann sich das Fenster über die gesamte Frontwand des Gehäusekörpers erstrecken. Die die Lichtstrahlen emittierenden Sender beziehungsweise die die Lichtstrahlen empfangenden Empfänger können somit über die gesamte Fläche der Frontwand des Gehäusekörpers verteilt werden, so dass diese gesamte Fläche zur Ausbildung des Messfelds genutzt werden kann.

Gemäß einer konstruktiv vorteilhaften Ausgestaltung weist der Gehäusekörper einen rechteckigen Querschnitt auf. Der oder jeder Kappenkörper liegt an einer an die Frontwand angrenzenden oder dieser gegenüberliegenden Seitenwand des Gehäusekörpers an.

Erfindungsgemäß sind dabei die Endkappen so ausgebildet, dass die Adapter in verschieden Orientierungen auf eine Öffnung des Gehäusekörpers aufgesetzt und dort fixiert werden können. Dies gilt insbesondere für Gehäusekörper mit quadratischen Querschnitten. Somit kann applikationsspezifisch gewählt werden, an welcher der Seitenwände der Kappenkörper anliegen soll.

Besonders vorteilhaft ist der flächige Adapter einer Elektronikkomponente plattenförmig ausgebildet.

Der plattenförmige Adapter weist eine besonders geringe Bauhöhe auf, so dass die Endkappe nur sehr geringfügig über das längsseitige Ende des Gehäuses hervorsteht, so dass die Endkappen an den längsseitigen Enden des Gehäusekörpers zu einer vernachlässigbaren Totzone an den Rändern der Gehäusekörper führen.

Weiterhin ist erfindungsgemäß vorgesehen, dass der Kappenkörper mit einer Wand flächig an einer Seitenwand des Gehäusekörpers anliegt.

Bevorzugt ist die Form der Wand des Kappenkörpers an die Form der Seitenwand angepasst.

Der Kappenkörper wird somit stabil am Gehäusekörper anliegend gelagert. Dies bildet eine zugleich kompakte als auch stabile Bauform des Gehäuses aus.

Dadurch, dass die Endkappen selbst Elektronikkomponenten aufnehmen können, brauchen nicht sämtliche Elektronikkomponenten im Gehäusekörper selbst angeordnet sein, wodurch eine kompakte Bauform des Gehäusekörpers und letztlich des gesamten Gehäuses erzielt wird.

Besonders vorteilhaft können in der oder jedem Kappenkörper elektrische Anschlüsse integriert sein.

Die elektrischen Anschlüsse können somit äußerst platzsparend angeordnet werden.

Weiterhin sind in dem oder jedem Kappenkörper Elektronikkomponenten zur Steuerung des Lichtvorhangs vorgesehen.

Dadurch ergibt sich ein modularer Aufbau des Lichtvorhangs, da unterschiedliche Anschlüsse oder unterschiedliche Elektronikkomponenten zur Steuerung beispielsweise eines Busanschlusses des Lichtvorhangs leicht applikationsspezifisch vorgesehen und bei Bedarf ausgetauscht werden können, in dem lediglich die Endkappen des Lichtvorhangs getauscht werden.

Schließlich sind in wenigstens einem Kappenkörper Bedien- und/oder Anzeigeelemente vorgesehen.

Die Erfindung wird im Folgenden anhand der Zeichnungen erläutert. Es zeigen:
- Figur 1:: Schematische Darstellung eines Ausführungsbeispiels des erfindungsgemäßen Lichtvorhangs.
- Figur 2:: Draufsicht auf das längsseitige Ende eines Gehäusekörpers des Lichtvorhangs gemäß Figur 1.
- Figur 3:: Draufsicht auf eine auf dem Gehäusekörper befestigte Endkappe.

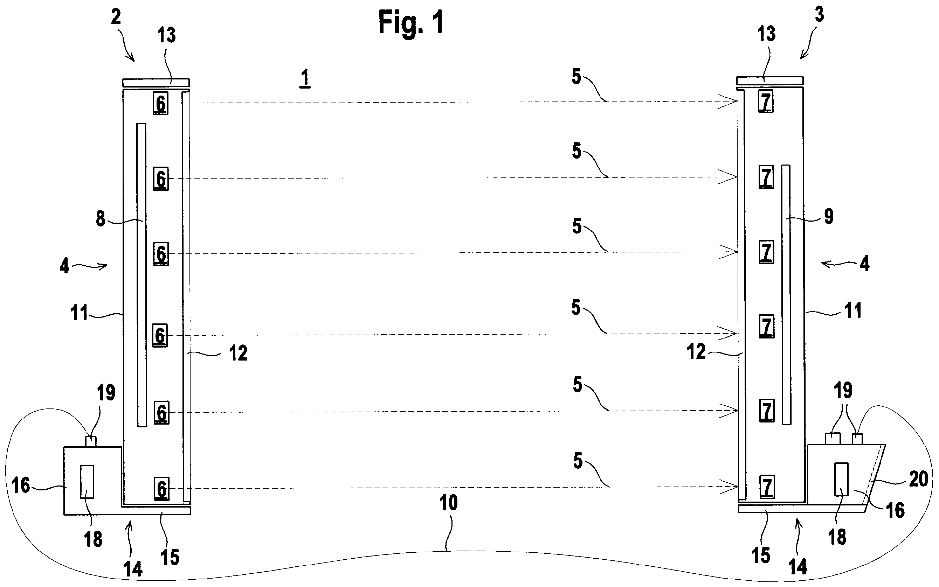

Figur 1 zeigt schematisch ein Ausführungsbeispiel des erfindungsgemäßen Lichtvorhangs 1, der zur Erfassung von Objekten in einem Überwachungsbereich eingesetzt wird. Der Lichtvorhang 1 umfasst eine Sendereinheit 2 und eine Empfängereinheit 3, welche an gegenüberliegenden Rändern des Überwachungsbereichs angeordnet sind. Sowohl die Sendereinheit 2 als auch die Empfängereinheit 3 umfassen ein Gehäuse 4, in welchem optoelektronische Elemente angeordnet sind. In der Sendereinheit 2 sind als optoelektronische Elemente Lichtstrahlen 5 emittierende Sender 6 integriert, die von Leuchtdioden oder dergleichen gebildet sind. Den Sendern 6 können nicht dargestellte Sendeoptiken zur Strahlformung der Lichtstrahlen 5 nachgeordnet sein. In der Empfängereinheit 3 sind als optoelektronische Elemente Lichtstrahlen 5 empfangende Empfänger 7 vorgesehen, die von Photodioden oder dergleichen gebildet sind. Den Empfängern 7 können nicht dargestellte Empfangsoptiken zur Fokussierung der Lichtstrahlen 5 auf den jeweiligen Empfänger 7 vorgeordnet sein. In der Sendereinheit 2 ist eine Rechnereinheit 8 zur Steuerung der einzelnen Sender 6 vorgesehen. In der Empfängereinheit 3 ist eine Rechnereinheit 9 vorgesehen, die den Betrieb der Empfänger 7 steuert und weiterhin zur Erfassung von Objekten die Empfangssignale an den Ausgängen der Empfänger 7 auswertet.

Jeweils ein Sender 6 und ein gegenüberliegender Empfänger 7 bilden ein zusammenarbeitendes Paar. Bei freiem Überwachungsbereich treffen die Lichtstrahlen 5 eines Senders 6 ungehindert auf den Empfänger 7 des jeweiligen Paares. Über eine elektrische Leitung 10 zwischen Sendereinheit 2 und Empfängereinheit 3 erfolgt eine elektrische Synchronisierung derart, dass die Paare einzeln zyklisch nacheinander aktiviert werden. Eine Objekterfassung erfolgt dadurch, dass in der Rechnereinheit 9 anhand einer Amplitudenbewertung, insbesondere einer Schwellwertbewertung, geprüft wird, welche Lichtstrahlen 5 durch einen Objekteingriff unterbrochen sind und welche nicht. In der Rechnereinheit 9 kann als Resultat der Auswertung ein binäres Schaltsignal generiert werden, dessen Schaltzustände angeben, ob sich ein Objekt im Überwachungsbereich befindet oder nicht. Alternativ kann der Lichtvorhang 1 auch als messender Sensor ausgebildet sein, um beispielsweise Konturen oder Größen von Objekten zu erfassen.

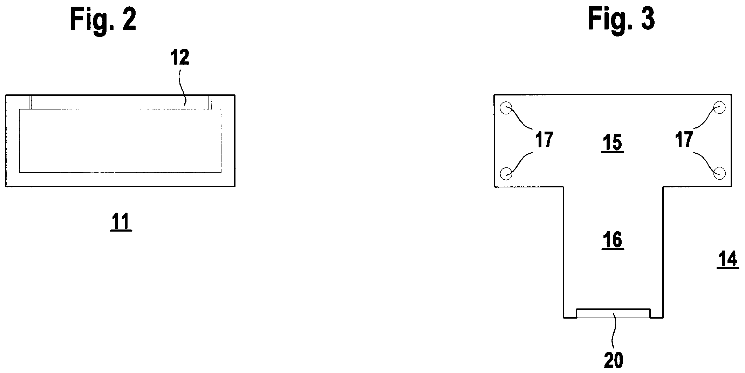

Im vorliegenden Fall sind die Gehäuse 4 der Sendereinheit 2 und Empfängereinheit 3 identisch ausgebildet. Jedes Gehäuse 4 weist einen Gehäusekörper 11 auf, der von einem Hohlprofil gebildet ist, insbesondere einem Stranggussprofil. Im vorliegenden Fall weist der Gehäusekörper 11 einen über seine gesamte Höhe konstanten rechteckigen Querschnitt auf, wobei Figur 2 eine Querschnittsdarstellung des Gehäusekörpers 11 zeigt.

In jeder der dem Überwachungsbereich zugewandten Frontwand des Gehäusekörpers 11 ist ein Fenster 12 integriert, wobei sich das Fenster 12 über nahezu die gesamte Frontwand erstreckt. Durch dieses Fenster 12 sind die einzelnen Lichtstrahlen 5 geführt.

Die Gehäusekörper 11 sind an ihren längsseitigen Enden offen. Über die Öffnungen werden die optoelektronischen Elemente und die Rechnereinheiten 8, 9 in die Gehäusekörper 11 eingeführt und dort lagefixiert, wobei hierzu vorzugsweise geeignete, nicht dargestellte Halterungen vorgesehen sind.

Bei dem fertig montierten Lichtvorhang 1 sind, wie Figur 1 zeigt, die Öffnungen der Gehäusekörper 11 mit Endkappen 13, 14 verschlossen. Eine erste Endkappe 13 bildet einen Verschlussdeckel der jeweils oberen Öffnung des Gehäusekörpers, wobei diese Endkappe 13 seitlich nicht über den Gehäusekörper 11 hervorsteht. Eine zweite Endkappe 14 dient jeweils zum Verschluss der unteren Öffnung eines Gehäusekörpers 11. Eine derartige Endkappe 14 ist in Figur 3 in einer Draufsicht dargestellt. Diese Endkappe 14 weist einen flächigen Adapter 15 sowie einen daran anschließenden Kappenkörper 16 auf. Der Adapter 15 weist eine flachbauende plattenförmige Form auf. Der Adapter 15 bildet ein Verschlusselement für eine Öffnung an einem längsseitigen Ende eines Gehäusekörpers 11. Zur Montage der Endkappe 14 wird der Adapter 15 auf die Öffnung aufgesetzt und am Gehäusekörper 11 befestigt, so dass der Adapter 15 die Öffnung dicht abschließt. Im vorliegenden Fall wird der Adapter 15 mittels Befestigungsschrauben 17 am Gehäusekörper 11 festgeschraubt.

An den Adapter 15 der Endkappe 14 schließt der Kappenkörper 16 an, wobei die obere Grenzfläche des Adapters 15 bündig an die anschließende ebene Grenzfläche des Kappenkörpers 16 anschließt. Der Kappenkörper 16 weist eine ebene Wand auf, die dicht an der ebenen Rückwand des Gehäusekörpers 11, das heißt der Seitenwand, die der Frontwand des Gehäusekörpers 11 gegenüberliegt, anschließt.

Durch diese Bauform der Endkappe 14 wird erreicht, dass diese nicht nennenswert über die längsseitigen Enden hervorsteht. Damit können nahezu die gesamten Längen des Gehäuses 4 für das Vorsehen von optoelektronischen Elementen genutzt werden. Dies ist in Figur 1 verdeutlicht. Das oberste Paar eines Senders 6 und Empfängers 7 ist so angeordnet, dass die Lichtstrahlen 5 dieses Paares unmittelbar am oberen Rand des Gehäusekörpers 11 verlaufen. Hierzu ist der oberste Sender 6 unmittelbar am oberen Rand des Gehäusekörpers 11 der Sendereinheit 2 angeordnet. Entsprechend ist der oberste Empfänger 7 unmittelbar am oberen Rand des Gehäusekörpers 11 der Empfängereinheit 3 angeordnet. Desweiteren sind der unterste Sender 6 und der unterste Empfänger 7 unmittelbar im Bereich der unteren Ränder der Gehäusekörper 11 installiert.

Damit erstreckt sich das von den Lichtstrahlen 5 gebildete Messfeld, innerhalb dessen mit dem Lichtvorhang 1 Objekte erfasst werden können, über nahezu die gesamte Länge der Gehäusekörper 11. Da durch die flachbauenden Adapter 15 mit den Endkappen 14 nahezu kein Überstand über die Gehäusekörper 11 erzeugt wird, erstreckt sich das Messfeld auch über die gesamten Längen der gesamten Gehäuse 4. Durch die Endkappen 13, 14 entstehen somit sehr geringe und vernachlässigbare Totbereiche, innerhalb derer keine Objektdetektion erfolgen kann.

Bei dem Ausführungsbeispiel gemäß Figur 1 liegen die Kappenkörper 16 der Endkappen 14 an der Rückwand des Gehäusekörpers 11 an. Generell können die Endkappen 14 auch so ausgebildet sein, dass je nach Orientierung des Adapters 15 am Gehäusekörper 11 der Kappenkörper 16 verschlossen an einer an die Frontwand angrenzenden Seitenwand des Gehäusekörpers 11 anliegt. Insbesondere bei einem quadratischen Querschnitt des Gehäusekörpers 11 kann der Adapter 15 wahlweise so montiert werden, dass der Kappenkörper 16 an einer Seitenwand oder an der Rückwand des Gehäusekörpers 11 anliegt.

Die Kappenkörper 16 der Endkappen 14 dienen generell zur Aufnahme von Elektronikkomponenten 18. Im vorliegenden Fall bilden die Elektronikkomponenten 18 Ergänzungen zu den Rechnereinheiten 8, 9, das heißt sie dienen zur Steuerung der Sender 6 und Empfänger 7. Durch die Auslagerung von Steuerungskomponenten in die Elektronikkomponenten 18 ist der Platzbedarf der Steuerungskomponenten in dem Gehäusekörper 11 reduziert. Der Kappenkörper 16 der umfangsseitigen Endkappe 14 weist elektrische Anschlüsse 19 auf, die zur elektrischen Verbindung der Empfängereinheit 3 und weiterhin zum Anschluss an externe Systeme wie Bussysteme dienen. Die Elektronikkomponenten 18 in dem Kappenkörper 16 der Endkappe 14 bilden Anschlussmodule hierfür. Zudem ist an der Außenseite am Kappenkörper 16 einer solchen Endkappe 14, wie in Figur 3 dargestellt, ein Anzeige- und ein Bedienfeld 20 vorgesehen, das von diesen Elektronikkomponenten 18 angesteuert wird. Über Bedienelemente wie Tasten am Anzeige- und Bedienfeld 20 können beispielsweise Parameter eingegeben werden. Eine Anzeige dieser Parameter oder gegebenenfalls von Statusmeldungen erfolgt über Anzeigen im Anzeige- und Bedienfeld 20.

### Bezugszeichenliste

- (1): Lichtvorhang
- (2): Sendereinheit
- (3): Empfängereinheit
- (4): Gehäuse
- (5): Lichtstrahlen
- (6): Sender
- (7): Empfänger
- (8): Rechnereinheit
- (9): Rechnereinheit
- (10): Leitung
- (11): Gehäusekörper
- (12): Fenster
- (13): Endkappe
- (14): Endkappe
- (15): Adapter
- (16): Kappenkörper
- (17): Befestigungsschraube
- (18): Elektronikkomponente
- (19): Anschluss
- (20): Anzeige- und Bedienfeld

## Patentansprüche

1. Lichtvorhang (1) zur Erfassung von Objekten in einem Überwachungsbereich, mit einer Anordnung von optoelektronischen Elementen welche von Lichtstrahlen (5) emittierenden Sendern (6) und von Lichtstrahlen (5) empfangenden Empfängern (7) gebildet sind und mit wenigstens einem Gehäuse zur Aufnahme der optoelektronischen Elemente, wobei das Gehäuse einen Gehäusekörper (11) in Form eines Hohlkörpers aufweist, wobei in diesem die optoelektronischen Elemente in Richtung der Längsachse des Gehäusekörpers (11) in Abstand hintereinander angeordnet sind, und wobei der Gehäusekörper (11) an seinen längsseitigen Enden jeweils eine Öffnung aufweist, welche mit Endkappen (14) verschlossen sind, wobei wenigstens eine Endkappe (13) einen flächigen Adapter (15) aufweist, welcher eine Öffnung des Gehäusekörpers (11) abschließt und an welchem ein seitlich am Gehäusekörper (11) anliegender Kappenkörper (16) anschließt, welcher Elektronikkomponenten (18) aufnimmt, und wobei der Kappenkörper (16) mit einer Wand flächig an einer Seitenwand des Gehäusekörpers (11) anliegt,
**dadurch gekennzeichnet, dass** der flächige Adapter (15) einer Elektronikkomponente (18) plattenförmig ausgebildet ist, und wobei die Endkappen für eine Kaskadierung mehrerer Lichtvorhänge ausgebildet sind.

2. Lichtvorhang nach Anspruch 1, **dadurch gekennzeichnet, dass** dieser eine Sendereinheit mit einem ersten Gehäuse (4), in welchem optoelektronische Elemente in Form von Lichtstrahlen (5) emittierenden Sendern (6) integriert sind, sowie eine Empfängereinheit mit einem zweiten Gehäuse (4), in welchem optoelektronische Elemente in Form von Lichtstrahlen empfangenden Empfänger (7) integriert sind, aufweist.

3. Lichtvorhang nach einem der Ansprüche 1 bis 2, **dadurch gekennzeichnet, dass** jeder Gehäusekörper (11) eine Frontwand mit einem Fenster (12), durch welches die Lichtstrahlen (5) geführt sind, aufweist, und dass der oder jeder Kappenkörper (16) einer Endkappe (13) an einer von der Frontwand abgesetzten Seitenwand des Gehäusekörpers (11) anliegt.

4. Lichtvorhang nach Anspruch 3, **dadurch gekennzeichnet, dass** der Gehäusekörper (11) einen rechteckigen Querschnitt aufweist, und dass der oder jeder Kappenkörper (16) an einer an die Frontwand angrenzenden oder dieser gegenüberliegenden Seitenwand des Gehäusekörpers (11) anliegt.

5. Lichtvorhang nach einem der Ansprüche 1 - 4, **dadurch gekennzeichnet, dass** die Form der Wand des Kappenkörpers (16) an die Form der Seitenwand angepasst ist.

6. Lichtvorhang nach einem der Ansprüche 1 bis 5, **dadurch gekennzeichnet, dass** in dem oder jedem Kappenkörper (16) elektrische Anschlüsse (19) integriert sind.

7. Lichtvorhang nach einem der Ansprüche 1 bis 6, **dadurch gekennzeichnet, dass** in dem oder jedem Kappenkörper (16) Elektronikkomponenten (18) zur Steuerung des Lichtvorhangs (1) vorgesehen sind.

8. Lichtvorhang nach einem der Ansprüche 1 bis 7, **dadurch gekennzeichnet, dass** in wenigstens einem Kappenkörper (16) Bedien- und/oder Anzeigeelemente vorgesehen sind.

## Claims

1. A light curtain (1) for detecting objects in a surveillance area, having an arrangement of optoelectronic elements which are formed by transmitters (6) emitting light beams (5) and receivers (7) receiving light beams (5), and having at least one housing for accommodating the optoelectronic elements, the housing having a housing body (11) in the form of a hollow body in which the optoelectronic elements are arranged one behind the other at a distance in the direction of the longitudinal axis of the housing body (11), and the housing body (11) having at each of its longitudinal ends an opening which is closed off with end caps (14),
wherein
at least one end cap (13) has a flat adapter (15) which closes off an opening in the housing body (11) and to which is connected a cap body (16) which bears laterally against the housing body (11) and accommodates electronic components (18), and the cap body (16) bearing with a wall flat against a side wall of the housing body (11),
**characterized in that** the flat adapter (15) of an electronic component (18) is plate-shaped, and **in that**
the end caps being designed for cascading a plurality of light curtains.

2. A light curtain according to claim 1, **characterised in that** it comprises a transmitter unit having a first housing (4) in which optoelectronic elements in the form of transmitters (6) emitting light beams (5) are integrated, and a receiver unit having a second housing (4) in which optoelectronic elements in the form of receivers (7) receiving light beams are integrated.

3. A light curtain according to one of claims 1 to 2, **characterised in that** each housing body (11) has a front wall with a window (12),
through which the light beams (5) are guided, and **in that** the or each cap body (16) of an end cap (13) bears against a side wall of the housing body (11) opposite the front wall.

4. A light curtain according to claim 3, **characterised in that** the housing body (11) has a rectangular cross-section and that the or each cap body (16) abuts against a side wall of the housing body (11) adjacent to or opposite the front wall.

5. A light curtain according to one of claims 1-4, **characterised in that** the shape of the wall of the cap body (16) is adapted to the shape of the side wall.

6. A light curtain according to one of claims 1 to 5, **characterised in that** electrical connections (19) are integrated in the or each cap body (16).

7. A light curtain according to one of claims 1 to 6, **characterised in that** electronic components (18) for controlling the light curtain (1) are provided in the or each cap body (16).

8. A light curtain according to one of claims 1 to 7, **characterised in that** operating and/or display elements are provided in at least one cap body (16).

## Revendications

1. Rideau lumineux (1) pour détecter des objets dans une zone de surveillance, comportant un agencement d'éléments optoélectroniques qui sont formés par des émetteurs (6) émettant des faisceaux lumineux (5) et des récepteurs (7) recevant des faisceaux lumineux (5), et comportant au moins un boîtier pour recevoir les éléments optoélectroniques, le boîtier comportant un corps de boîtier (11) sous forme d'un corps creux dans lequel les éléments optoélectroniques sont disposés l'un derrière l'autre à une certaine distance dans la direction de l'axe longitudinal du corps de boîtier (11), et le corps de boîtier (11) comportant à chacune de ses extrémités longitudinales une ouverture qui est fermée par des embouts (14),
dans lequel
au moins un capuchon d'extrémité (13) présente un adaptateur plat (15) qui ferme une ouverture dans le corps de boîtier (11) et auquel est relié un corps de capuchon (16) qui s'appuie latéralement contre le corps de boîtier (11) et reçoit des composants électroniques (18), et le corps de capuchon (16) portant avec une paroi plate contre une paroi latérale du corps de boîtier (11),
**caractérisé en ce que** l'adaptateur plat (15) d'un composant électronique (18) est en forme de plaque, et **en ce que**
les capuchons d'extrémité étant conçus pour la mise en cascade d'une pluralité de barrières immatérielles.

2. Rideau lumineux selon la revendication 1, **caractérisé en ce qu'**il comprend une unité émettrice comportant un premier boîtier (4) dans lequel sont intégrés des éléments optoélectroniques sous la forme d'émetteurs (6) émettant des faisceaux lumineux (5), et une unité réceptrice comportant un second boîtier (4) dans lequel sont intégrés des éléments optoélectroniques sous la forme de récepteurs (7) recevant les faisceaux lumineux.

3. Rideau lumineux selon l'une des revendications 1 à 2, **caractérisé en ce que** chaque corps de boîtier (11) présente une paroi frontale avec une fenêtre (12),
à travers lequel les faisceaux lumineux (5) sont guidés, et **en ce que** le ou chaque corps de capuchon (16) d'un capuchon d'extrémité (13) repose contre une paroi latérale du corps de boîtier (11) opposée à la paroi avant.

4. Rideau lumineux selon la revendication 3, **caractérisé en ce que** le corps de boîtier (11) a une section transversale rectangulaire et **en ce que** le ou chaque corps de capuchon (16) est appuyé contre une paroi latérale du corps de boîtier (11) adjacente ou opposée à la paroi avant.

5. Rideau lumineux selon l'une des revendications 1 à 4, **caractérisé en ce que** la forme de la paroi du corps de capuchon (16) épouse la forme de la paroi latérale.

6. Rideau lumineux selon l'une des revendications 1 à 5, **caractérisé en ce que** des connexions électriques (19) sont intégrées dans le ou chaque corps de capuchon (16).

7. Rideau lumineux selon l'une des revendications 1 à 6, **caractérisé en ce que** des composants électroniques (18) pour commander le rideau lumineux (1) sont prévus dans le ou chaque corps de capuchon (16).

8. Rideau lumineux selon l'une des revendications 1 à 7, **caractérisé en ce que** des éléments de commande et/ou d'affichage sont prévus dans au moins un corps de capuchon (16).
